(19) **Europäisches Patentamt / European Patent Office / Office européen des brevets**

(11) **EP 2 746 364 A1**

(12) **EUROPEAN PATENT APPLICATION**
published in accordance with Art. 153(4) EPC

(43) Date of publication:
**25.06.2014 Bulletin 2014/26**

(21) Application number: **12824602.2**

(22) Date of filing: **15.08.2012**

(51) Int Cl.:
*C09K 17/18* (2006.01)   *C09K 17/02* (2006.01)
*C09K 17/06* (2006.01)   *C09K 17/48* (2006.01)
*E02D 5/18* (2006.01)    *E02D 5/20* (2006.01)
*C09K 103/00* (2006.01)

(86) International application number:
**PCT/JP2012/070769**

(87) International publication number:
**WO 2013/024878 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2011   JP 2011178406**
             **09.08.2012   JP 2012177079**

(71) Applicants:
• **Waseda University**
  **Tokyo 169-8050 (JP)**
• **Maguma CO., LTD.**
  **Kanagawa 247-0051 (JP)**
• **Toda Corporation**
  **Tokyo 104-0031 (JP)**

(72) Inventors:
• **AKAGI, Hirokazu**
  **Tokyo 169-8050 (JP)**

• **KONDOH, Yoshimasa**
  **Kanagawa 247-0051 (JP)**
• **UEHARA, Seiji**
  **Kanagawa 247-0051 (JP)**
• **ASANO, Hitoshi**
  **Tokyo 104-0031 (JP)**
• **UKEGAWA, Makoto**
  **Tokyo 104-0031 (JP)**

(74) Representative: **Calamita, Roberto**
  **Dehns**
  **St Bride's House**
  **10 Salisbury Square**
  **London**
  **EC4Y 8JD (GB)**

(54) **STABLE LIQUID COMPOSITION OF SWOLLEN SUPERABSORBENT POLYMER FOR GROUND EXCAVATION AND CONSTRUCTION METHOD USING SAME**

(57)   A stable liquid composition of a swollen superabsorbent polymer for ground excavation includes water and superabsorbent polymer particles swollen by water absorption, and the specific gravity of the stable liquid composition of a swollen superabsorbent polymer for ground excavation is equal to or less than 1.20. Accordingly, it is possible to provide a stable liquid composition of a swollen superabsorbent polymer for ground excavation and a construction method using the swollen superabsorbent polymer stable liquid composition which can form a stable aquiclude even in a gravel ground having a large water permeability coefficient prevent a decrease in replaceability with concrete and in adhesiveness of concrete to a reinforcing bar, and reduce an amount of waste soil.

Fig. 1

**Description**

Technical Field

The present invention relates to a stable liquid composition of a swollen superabsorbent polymer for ground excavation which is used in a cast-in-place piling construction or a continuous underground concrete wall construction and a construction method using the stable liquid composition.

Background Art

Examples of a stable liquid used for excavation in a cast-in-place piling construction or a concrete continuous underground wall construction include a bentonite stable liquid, a polymer stable liquid, and a bubble stable liquid.

Table 1 shows standard mixing quantities (kg) of bentonite stable liquid and the polymer stable liquid per 1 $m^3$ of water by excavated soil types. The composition includes bentonite, carboxymethyl cellulose (hereinafter, abbreviated to CMC) as a polymer, and a dispersant. Bentonite is a major constituent material of which the weight composition is about 90% or more.

Table 1

| Excavated Soil | Bentonite stable liquid | | | Polymer stable liquid | | |
|---|---|---|---|---|---|---|
| | Bentonite (kg) | Polymer (kg) | dispersant (kg) | Polymer (kg) | Bentonite (kg) | Dispersant (kg) |
| Clay | 40~60 | 0~1 | 0.5~3 | 1~4 | 10~20 | 0~3 |
| Sandy soil | 60~80 | 1~2 | 1~3 | 3~5 | 10~30 | 0.5~3 |
| gravel | 80~120 | 1~3 | 2~3 | 4~6 | 20~40 | 1~3 |

Bentonite is used to prevent lost circulation of a stable liquid by forming a low-permeable membrane on an excavated surface and is subordinately used to make the specific gravity of the stable liquid appropriate. The CMC is used to increase viscosity of the stable liquid to decrease an amount of filtered water. The dispersant is used to prevent malfunction of the stable liquid.

Since the composition of the bentonite stable liquid and the composition of the polymer stable liquid are different from each other in only a blending ratio of the bentonite and the CMC, these stable liquids are hereinafter referred to as a bentonite-based stable liquid composition.

The bentonite-based stable liquid composition has been widely used. However, when a gravel layer having large pore diameters between soil particles and having high water permeability is excavated, a low-permeable membrane may not be sufficiently formed on the groove wall surface and lost circulation may not be stopped, thereby causing collapse of the groove wall.

Accordingly, a countermeasure has been proposed in which pulp fibers, superabsorbent fibers, or superabsorbent polymer particles are added as a lost circulation preventing material to a bentonite-based stable liquid composition to clog the pores between the soil particles and to reduce an amount of lost circulation and a low-permeable membrane is formed on the groove wall surface out of the bentonite (for example, see PTL 1 and PTL 2).

When the bentonite-based stable liquid composition is used, there is a problem in that the bentonite is attached to a reinforcing bar to make it easy to reduce the adhesion strength at the time of replacement of the bentonite-based stable liquid composition with concrete and the bentonite is mixed into waste soil to make it difficult to recycle the waste soil.

On the other hand, there is a proposal that a bubble stable liquid in which excavated sand and soil, bubbles, and water are appropriately mixed to form a suspension by adding bubbles and water to excavated sand and soil at the time of excavation is used as a stable liquid (for example, see PTL 3).

The bubble stable liquid is a useful stable liquid, because the amount of waste soil generated is small, the waste soil can be easily recycled, and bubbles fill pores of a gravel layer to cause the soil layer and bubbles to form an aquiclude together even when an excavated soil layer is a gravel layer having high water permeability. However, since the specific gravity of the bubble stable liquid for maintaining the suspending state ranges from about 1.3 to 1.4 and viscosity of the bubble stable liquid is high in this range, there is a problem in replaceability with concrete.

Citation List

Patent Literature

[PTL 1] Japanese Patent No. 3158940
[PTL 2] JP-A-2004-99677
[PTL 3] Japanese Patent No. 3725750

Disclosure of Invention

Technical Problem

The present invention is made to solve the conventional problems in view of the above-mentioned circumstances and an object thereof is to provide a stable liquid composition of a swollen superabsorbent polymer for ground excavation and a construction method using the swollen superabsorbent polymer stable liquid composition which can form a stable aquiclude even in a gravel ground having a large water permeability coefficient, have excellent replaceability with concrete, prevent a decrease in adhesiveness of concrete to a reinforcing bar, and reduce an amount of waste soil.

Solution to Problem

The present invention provides the following configurations to achieve the above-mentioned object.
According to a first aspect of the present invention, there is provided a stable liquid composition of a swollen superabsorbent polymer for ground excavation including: water; and superabsorbent polymer particles swollen by water absorption, wherein the specific gravity of the stable liquid composition of a swollen superabsorbent polymer for ground excavation is equal to or less than 1.20.
According to a second aspect of the present invention, it is preferable that the stable liquid composition of a swollen superabsorbent polymer for ground excavation according to the first aspect further include a weighting material of an inorganic material of which the maximum particle diameter is equal to or less than 2.0 mm.
According to a third aspect of the present invention, in the stable liquid composition of a swollen superabsorbent polymer for ground excavation according to the second aspect, it is preferable that the weighting material be fine particles of a ground which are mixed from an excavated ground at the time of excavation.
According to a fourth aspect of the present invention, in the stable liquid composition of a swollen superabsorbent polymer for ground excavation according to the second or third aspect, it is preferable that the weighting material be at least one type selected from silt, clay minerals, and sulfate minerals.
According to a fifth aspect of the present invention, in the stable liquid composition of a swollen superabsorbent polymer for ground excavation according to any one of the first to fourth aspects, it is preferable that a stabilizer enabling degradation suppression or recovery of nature and quality of the stable liquid composition of a swollen superabsorbent polymer for ground excavation be added when electrolytes such as concrete, salt and so on or acid or alkali materials are mixed.
According to a sixth aspect of the present invention, in the stable liquid composition of a swollen superabsorbent polymer for ground excavation according to the fifth aspect, it is preferable that the stabilizer be a stabilizer that lowers an electrolyte concentration.
According to a seventh aspect of the present invention, in the stable liquid composition of a swollen superabsorbent polymer for ground excavation according to the fifth or sixth aspect, it is preferable that the stabilizer be a neutralizer that neutralizes pH (hydrogen-ion exponent concentration).
According to an eighth aspect of the present invention, in the stable liquid composition of a swollen superabsorbent polymer for ground excavation according to any one of the fifth to seventh aspects, it is preferable that the stabilizer be at least one type selected from diluted sulfuric acid, aluminum sulfate, aluminum hydroxide, magnesium hydroxide, polyacrylamide, polyvinyl alcohol, sodium polyacrylate, polyethylene oxide, hydrogen carbonate, and carbonate.
According to a ninth aspect of the present invention, it is preferable that the stable liquid composition of a swollen superabsorbent polymer for ground excavation according to any one of the first to eighth aspects further include an assistant material for improving excavated wall stability.
According to a tenth aspect of the present invention, in the stable liquid composition of a swollen superabsorbent polymer for ground excavation according to the ninth aspect, it is preferable that the assistant material be at least one type selected from lost circulation preventing materials such as bentonite, sawdust, pulp, rock wool, fiber and so on and water-soluble polymers.

According to an eleventh aspect of the present invention, in the stable liquid composition of a swollen superabsorbent polymer for ground excavation according to any one of the first to tenth aspects, it is preferable that the superabsorbent polymer particles be at least one type selected from starch-based materials, cellulose-based materials, and synthetic polymer-based materials.

According to a twelfth aspect of the present invention, in the stable liquid composition of a swollen superabsorbent polymer for ground excavation according to any one of the first to eleventh aspects, it is preferable that the superabsorbent polymer particles swollen by water absorption be superabsorbent polymer particles having a cross-linked structure and not discharging water by pressurization.

According to a thirteenth aspect of the present invention, in the stable liquid composition of a swollen superabsorbent polymer for ground excavation according to any one of the first to twelfth aspects, it is preferable that the particle diameter of the superabsorbent polymer particles swollen by water absorption after being swollen be equal to or less than 3 mm.

According to a fourteenth aspect of the present invention, in the stable liquid composition of a swollen superabsorbent polymer for ground excavation according to any one of the first to thirteenth aspects, it is preferable that funnel viscosity (500 ml/500 ml) range from 19 sec to 120 sec.

According to a fifteenth aspect of the present invention, in the stable liquid composition of a swollen superabsorbent polymer for ground excavation according to any one of the first to fourteenth aspects, it is preferable that electric conductivity be equal to or less than 10 mS/cm.

According to a sixteenth aspect of the present invention, there is provided a construction method in which water is discharged from the superabsorbent polymer particles by adding an electrolyte to the stable liquid composition of a swollen superabsorbent polymer for ground excavation according to any one of the first to fifteenth aspects, and the swollen superabsorbent polymer stable liquid composition is separated into the water including the electrolyte and the superabsorbent polymer particles having the water discharged therefrom to reduce an amount of waste soil.

According to a seventeenth aspect of the present invention, in the construction method according to the sixteenth aspect, it is preferable that the electrolyte be at least one type selected from calcium chloride, citric acid, sodium hydroxide, and sodium chloride.

According to an eighteenth aspect of the present invention, there is provided a construction method in which an excavating construction is carried out using the stable liquid composition of a swollen superabsorbent polymer for ground excavation according to any one of the first to fifteenth aspects, the stable liquid composition of a swollen superabsorbent polymer for ground excavation is recovered after the excavation, water, superabsorbent polymer particles, a weighting material, a stabilizer, and an assistant material are appropriately added to the recovered stable liquid composition of a swollen superabsorbent polymer for ground excavation to adjust nature and quality thereof, and the resultant stable liquid composition of a swollen superabsorbent polymer for ground excavation is recycled as a stable liquid for the next excavation.

According to a nineteenth aspect of the present invention, there is provided a construction method in which an excavating construction is carried out by mixing and using the stable liquid composition of a swollen superabsorbent polymer for ground excavation according to any one of the first to fifteenth aspects at high viscosity at which the funnel viscosity (500 ml/500 ml) ranges 45 sec to 120 sec, and a hole bottom processing operation is skipped by adding excavation waste mixed into the stable liquid composition of a swollen superabsorbent polymer for ground excavation at the time of excavation to the stable liquid composition of a swollen superabsorbent polymer for ground excavation.

According to a twentieth aspect of the present invention, there is provided a construction method in which an excavating construction is carried out by mixing and using the stable liquid composition of a swollen superabsorbent polymer for ground excavation according to any one of the first to fifteenth aspects at low viscosity at which the funnel viscosity (500 ml/500 ml) ranges 19 sec to 44 sec, and a hole bottom waste processing operation is rapidly carried out by early precipitating excavation waste mixed into the stable liquid composition of a swollen superabsorbent polymer for ground excavation at the time of excavation onto a hole bottom.

According to a twenty-first aspect of the present invention, there is provided a construction method in which an excavating construction is carried out using the stable liquid composition of a swollen superabsorbent polymer for ground excavation according to any one of the first to fifteenth aspects, the used stable liquid composition of a swollen superabsorbent polymer for ground excavation is recovered, excavation waste mixed at the time of excavation construction is precipitated by adding water to the recovered stable liquid composition of a swollen superabsorbent polymer for ground excavation, the stable liquid composition of a swollen superabsorbent polymer for ground excavation and the excavation waste are separated from each other, and the stable liquid composition of a swollen superabsorbent polymer for ground excavation of which the specific gravity is reduced is recycled for the next construction.

According to a twenty-second aspect of the present invention, there is provided a construction method in which an excavating construction is carried out using the stable liquid composition of a swollen superabsorbent polymer for ground excavation according to any one of the first to fifteenth aspects, and a friction reducing operation is carried out to suppress an influence of concrete to the stable liquid composition of a swollen superabsorbent polymer for ground excavation by applying or attaching a friction-reducing material to a surface of a tremie pipe at the time of casting the concrete from the bottom using the tremie pipe.

According to a twenty-third aspect of the present invention, in the construction method according to any one of the sixteenth to twenty-second aspects, it is preferable that the construction method be a cast-in-place piling method or a concrete continuous underground wall construction method.

Advantageous Effects of Invention

In the stable liquid composition of a swollen superabsorbent polymer for ground excavation according to the present invention and the construction method using the swollen superabsorbent polymer stable liquid composition, it is possible to form a stable aquiclude even in a gravel ground having a large water permeability coefficient, to have excellent replaceability with concrete, to prevent a decrease in adhesiveness of concrete to a reinforcing bar, and to reduce an amount of waster soil.

Brief Description of Drawings

Fig. 1 is a schematic diagram of an apparatus that measures formation of an aquiclude.
Fig. 2 is a graph illustrating a difference in water permeability coefficient of stable liquids.
Fig. 3 is a graph illustrating a relationship between an electrolyte concentration and an amount of water absorbed.
Fig. 4 is a graph illustrating a mud thickness remaining on a filter paper after filtering with respect to a mixing ratio of clay fraction.
Fig. 5 is a graph illustrating a precipitation rate of sand with respect to the elapsed time after adding water to a stable liquid.
Fig. 6 is a schematic graph of a system for separating, removing, and recycling mixed excavation waste.

Description of Embodiments

A stable liquid composition of a swollen superabsorbent polymer for ground excavation according to the present invention includes water and superabsorbent polymer particles swollen by water absorption.

Superabsorbent polymer particles used for the stable liquid composition of a swollen superabsorbent polymer for ground excavation according to the present invention are a hydrophilic polymer having a cross-linked structure, have water-absorbing capability of ten times or more the weight thereof, are difficult to separate water even with pressurization, and have an amount of water absorbed defined in JIS K 7223.

The type of the superabsorbent polymer particles used in the present invention is not particularly limited as long as it satisfies the above-mentioned conditions, and examples thereof include starch-based, cellulose-based, and synthetic polymer-based superabsorbent polymers. Among these types, sodium polyacrylate superabsorbent polymer particles can be particularly appropriately used in view of both of performance and cost.

The sodium-polyacrylate superabsorbent polymer particles are a gel of acrylate polymer fraction sodium salt cross-linked materials having a three-dimensional mesh structure obtained by lightly cross-linking sodium acrylate ($CH_2$=CH-COONa) by adding a cross-linking agent there to. Various types of cross-linking agents are used.

It is known that a carboxyl group of a sodium-polyacrylate superabsorbent polymer particle dissociates sodium ions in the gel by absorbing water and a degree of swelling of 100 times to 1000 times its own weight is generated in pure water.

Regarding the amount of water absorbed by the sodium-polyacrylate superabsorbent polymer particles, the gel is hardened and the amount of water absorbed decreases, when an amount of cross-linking agent added to sodium acrylate increases. When the amount of cross-liking agent added decreases, the gel is softened and the amount of water absorbed increases.

As special sodium-polyacrylate superabsorbent polymer particles, there are sodium-polyacrylate superabsorbent polymer particles having a dual structure of a shell and a core in which the surfaces of superabsorbent polymer particles polymerized by a cross-linking agent are further cross-linked.

In the sodium-polyacrylate superabsorbent polymer particles having a dual structure of a shell and a core, the thicker the shell becomes, the harder the gel becomes and the less the amount of water absorbed becomes. The thinner the shell becomes, the softer the gel becomes and the more the amount of water absorbed becomes.

The shell and the core are generally cross-linked by ester bonds, and there are sodium-polyacrylate superabsorbent polymer particles in which the core has an ether bond having excellent alkali resistance and electrolyte resistance.

In the present invention, the ether bond is more preferably employed.

In addition to the above-mentioned characteristics, since the dissociation of sodium ions in the sodium-polyacrylate superabsorbent polymer particles depends on conditions such as pH or a salt concentration in which the gel is used, other superabsorbent polymer particles can be appropriately selected and used depending on the use conditions.

In general, since a stable liquid composition of a swollen superabsorbent polymer for ground excavation may be used at a large depth, it is necessary to select superabsorbent polymer particles having a cross-linked structure in which a decrease in water holding force is small with pressurization and it is difficult to be deformed. In order to clog the pores between soil particles of a soil layer in which lost circulation easily occurs, it is preferable that the particle diameter after being swollen be 3 mm or less and have a good particle size distribution.

In the present invention, sodium-polyacrylate superabsorbent polymer particles can be used without particular limitation, as long as they satisfy the above-mentioned conditions. Particularly, the sodium-polyacrylate superabsorbent polymer particles having a dual structure of a shell and a core, which have been adjusted in the above-mentioned conditions, can be suitably used.

In the stable liquid composition of a swollen superabsorbent polymer for ground excavation according to the present invention, the specific gravity thereof is adjusted to 1.20 or less and preferably to a range of 0.95 to 1.20 in a state where water is added to the swollen superabsorbent polymer particles.

An inorganic material as a weighting material can be added to the stable liquid composition of a swollen superabsorbent polymer for ground excavation according to the present invention.

Silt or fine crushed particles of barite or ceramics can be used as the inorganic material which is a weighting material used in the present invention.

Regarding addition of the weighting material, the inorganic material may be added in advance to the stable liquid composition of a swollen superabsorbent polymer for ground excavation, or fine particles of ground mixed from the excavation ground at the time of excavation may be used as the weighting material in addition to the inorganic material or instead of the inorganic material.

Regarding the particle diameter of the weighting material, the maximum particle diameter is 2.0 mm or less and preferably 1.0 mm or less.

By setting the particle diameter to this range, it is possible to form a stable aquiclude and to provide a stable liquid composition of a swollen superabsorbent polymer for ground excavation which is very suitable for disposal and recycle of the stable liquid composition of a swollen superabsorbent polymer for ground excavation recovered after the excavation to be described later.

In the stable liquid composition of a swollen superabsorbent polymer for ground excavation according to the present invention, the specific gravity thereof is adjusted to 1.20 or less and preferably to a range of 0.95 to 1.20 in a state where water and the weighting material are added to the swollen superabsorbent polymer particles. In the stable liquid composition of a swollen superabsorbent polymer for ground excavation in which fine particles of ground mixed from the excavation ground at the time of excavation are used as the weighting material instead of adding the inorganic material as the weighting material in advance, the specific gravity may be adjusted to a range of 1.00 to 1.20. The adjustment of the specific gravity can be carried out using Expression (1).

When the mass of superabsorbent polymer particles swollen by adding water to superabsorbent polymer particles before absorption is defined as $W_{P4}$, the volume thereof is defined as $V_{P4}$, the specific gravity thereof is defined as $\rho_{P4}$, the mass of the weighting material added to the stable liquid of a swollen superabsorbent polymer is defined as $W_S$, the volume thereof is defined as $V_S$, and the specific gravity thereof is defined as $\rho_S$, the specific gravity $\rho_C$ of the stable liquid composition of a swollen superabsorbent polymer for ground excavation is expressed by Expression (1).
Math. 1

$$\rho_c = \frac{W_{P4} + W_S}{V_{P4} + V_S} = \frac{W_{P4} + W_S}{W_{P4}/\rho_{P4} + W_S/\rho_S} \qquad (1)$$

Regarding the adjustment of the specific gravity when the weighting material is not added, the mass $W_S$, the volume $V_S$, and the specific gravity $\rho_S$ of the weighting material added can be set to 0.

Regarding the viscosity of the stable liquid composition of a swollen superabsorbent polymer for ground excavation according to the present invention, the funnel viscosity (500 ml/500 ml) is adjusted to a range of 19 sec to 120 sec and preferably to a range to 22 sec to 30 sec. Here, the funnel viscosity is viscosity measured using a Marsh funnel viscometer which measures viscosity by the efflux time (seconds) taken for a sample liquid input to a funnel-like vessel of 500 ml to be discharged by 500 ml.

In order to improve excavated wall stability and to adjust the viscosity of the stable liquid composition of a swollen superabsorbent polymer for ground excavation or to promote precipitation of excavation waste, an assistant material can be added to the stable liquid composition of a swollen superabsorbent polymer for ground excavation according to the present invention.

As the assistant material used in the present invention, at least one type selected from lost circulation preventing materials such as bentonite, sawdust, pulp, rock wool, and fiber and water-soluble polymers can be used.

When electrolytes such as concrete or salt or acid or alkali materials are mixed, a stabilizer enabling degradation suppression or recovery of nature and quality of the stable liquid composition of a swollen superabsorbent polymer for ground excavation can be added to the stable liquid composition of a swollen superabsorbent polymer for ground excavation according to the present invention.

As the stabilizer used in the present invention, at least one type selected from diluted sulfuric acid, aluminum sulfate, aluminum hydroxide, magnesium hydroxide, polyacrylamide, polyvinyl alcohol, sodium polyacrylate, polyethylene oxide, hydrogen carbonate such as sodium hydrogen carbonate, calcium hydrogen carbonate, potassium hydrogen carbonate, and ammonium hydrogen carbonate, and carbonate such as sodium carbonate, calcium carbonate, potassium carbonate, and ammonium carbonate can be used.

In the course of construction, when electrolytes such as concrete or salts are mixed into the stable liquid composition of a swollen superabsorbent polymer for ground excavation and the electrolyte concentration increases, the superabsorbent polymer particles in the stable liquid composition of a swollen superabsorbent polymer for ground excavation decrease in water-absorbing capability and discharge absorbed water therefrom, whereby nature and quality of the stable liquid composition of a swollen superabsorbent polymer for ground excavation such as the funnel viscosity or the amount of filtered water rapidly degrade.

By adding a stabilizer in advance in consideration of such circumstances, it is possible to suppress the increase in electrolyte concentration and to prevent the degradation of nature and quality of the stable liquid composition of a swollen superabsorbent polymer for ground excavation.

By adding a stabilizer to the stable liquid composition of a swollen superabsorbent polymer for ground excavation having degraded due to mixture of electrolytes, the electrolyte concentration can be decreased and discharged water can be re-absorbed, thereby recovering the nature and the quality of the stable liquid composition of a swollen superabsorbent polymer for ground excavation.

When concrete is mixed and the composition becomes alkaline, the nature and the quality of the stable liquid composition of a swollen superabsorbent polymer for ground excavation degrade. Accordingly, by adding a stabilizer as a neutralizer to neutralize pH (hydrogen-ion exponent concentration), it is possible to recover the nature and the quality.

In the stable liquid composition of a swollen superabsorbent polymer for ground excavation according to the present invention, it is preferable that electric conductivity be equal to or less than 10 mS/cm.

By setting the electric conductivity of the stable liquid composition of a swollen superabsorbent polymer for ground excavation to this range, it is possible to provide a stable liquid composition of a swollen superabsorbent polymer for ground excavation which can suppress degradation of cast concrete, adhesion to steel, and corrosion of steel.

In a construction method using the stable liquid composition of a swollen superabsorbent polymer for ground excavation according to the present invention, the stable liquid composition of a swollen superabsorbent polymer for ground excavation can be simply disposed after the construction ends. The principle of disposal in the present invention will be described below in detail.

In the construction method using the stable liquid composition of a swollen superabsorbent polymer for ground excavation according to the present invention, the stable liquid composition of a swollen superabsorbent polymer can be easily disposed by adding electrolytes thereto.

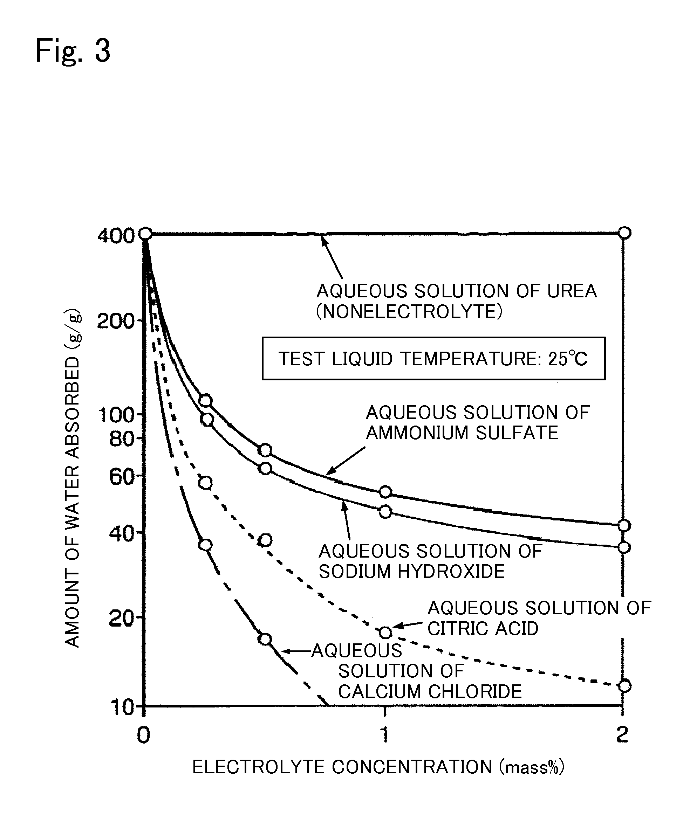

When electrolytes are added to the stable liquid composition of a swollen superabsorbent polymer, as illustrated in Fig. 3, the swollen superabsorbent polymer discharges absorbed water to reduce the volume thereof depending on the types of the electrolytes and the electrolyte concentrations of the electrolytes.

The electrolytes used in the disposal method in the present invention are not particularly limited as long as the electrolytes discharge water by addition to the stable liquid composition of a swollen superabsorbent polymer. Examples thereof include acidic materials such as hydrochloric acid, sulfuric acid, nitric acid, and citric acid, basic materials such as sodium hydroxide, potassium hydroxide, and calcium hydroxide, and salts such as calcium chloride, sodium chloride, and pottasium chloride. Among these examples, calcium chloride can be suitably used in view of environmental load or economical aspect at the time of disposal.

In a specific example of disposal, for example, when the stable liquid composition of a swollen superabsorbent polymer for ground excavation includes as constituent materials 0.2% of superabsorbent polymer particles, 4.8% of a weighting material, and 95% of water, the stable liquid can be separated into 95% of calcium chloride aqueous solution, 5% of a weighting material, and a solid of superabsorbent polymer particles by adding calcium chloride thereto.

In this way, in the construction method according to the present invention which can separate the stable liquid composition of a swollen superabsorbent polymer for ground excavation into a solid and a liquid and dispose them, it is possible to facilitate the disposal and to suppress the processing cost to be very low.

In the construction method using the stable liquid composition of a swollen superabsorbent polymer for ground excavation according to the present invention, a hole bottom processing operation following the excavation can be skipped.

In general, when a cast-in-place pile is constructed using the bentonite-based stable liquid composition used in the related art and shown in Table 1, excavation waste accompanied with the excavation is precipitated on the excavated bottom, which serves as a reason of a decrease in concrete strength, a sectional loss, and a decrease in pile supporting force. Accordingly, it is necessary to perform a hole bottom processing operation of removing excavation waste before casting concrete.

On the other hand, when the stable liquid of a swollen superabsorbent polymer according to the present invention shown in Table 3 is mixed at high viscosity and is then used, the excavation waste accompanied with the excavation is not precipitated and floats in the stable liquid of a swollen superabsorbent polymer. Accordingly, it is possible to skip a waiting time for precipitation of excavation waste or a hole bottom processing operation, thereby improving construction efficiency of the pile construction.

When the stable liquid of a swollen superabsorbent polymer according to the present invention shown in Table 3 is mixed at low viscosity and is then used, the excavation waste mixed into the stable liquid composition of a swollen superabsorbent polymer for ground excavation at the time of excavation can be early precipitated on the hole bottom, thereby rapidly perform the hole-bottom excavation waste processing operation.

Regarding the viscosity in this case, the high viscosity can be identified in a range of funnel viscosity (500 ml/500 ml) of 45 sec to 120 sec and the low viscosity can be identified in a range of funnel viscosity (500 ml/500 ml) of 19 sec to 44 sec.

The stable liquid composition of a swollen superabsorbent polymer for ground excavation mixed with the excavation waste and used in the excavating construction can be recovered and can be recycled as a stable liquid for the next construction.

Specifically, (1) After the excavation is finished, the stable liquid composition of a swollen superabsorbent polymer for ground excavation is recovered with casting of concrete. Then, (2) water, superabsorbent polymer particles, a weighting material, a stabilizer, and an assistant material are appropriately added to the recovered stable liquid composition of a swollen superabsorbent polymer for ground excavation to adjust the nature and the quality thereof and the resultant can be recycled for the next excavation.

The stable liquid composition of a swollen superabsorbent polymer for ground excavation recovered with casting of concrete is mixed with the excavation waste. However, when water over water-absorbing capability of the superabsorbent polymer particles is added to the stable liquid composition of a swollen superabsorbent polymer for ground excavation mixed with the excavation waste, the stable liquid composition of a swollen superabsorbent polymer for ground excavation mixed with the excavation waste has nature that the mixed excavation waste is precipitated and the surplus water over the water-absorbing capability is separated as supernatant water.

Using this nature, the recovered stable liquid composition of a swollen superabsorbent polymer for ground excavation mixed with the excavation waste can be separated into excavation waste precipitated on the bottom, surplus water in the top layer, and the stable liquid composition of a swollen superabsorbent polymer for ground excavation in the middle layer by adding water over the water-absorbing capability thereto.

Processes of recovering, processing, and recycling a stable liquid of a swollen superabsorbent polymer will be specifically described below with reference to the accompanying drawings.

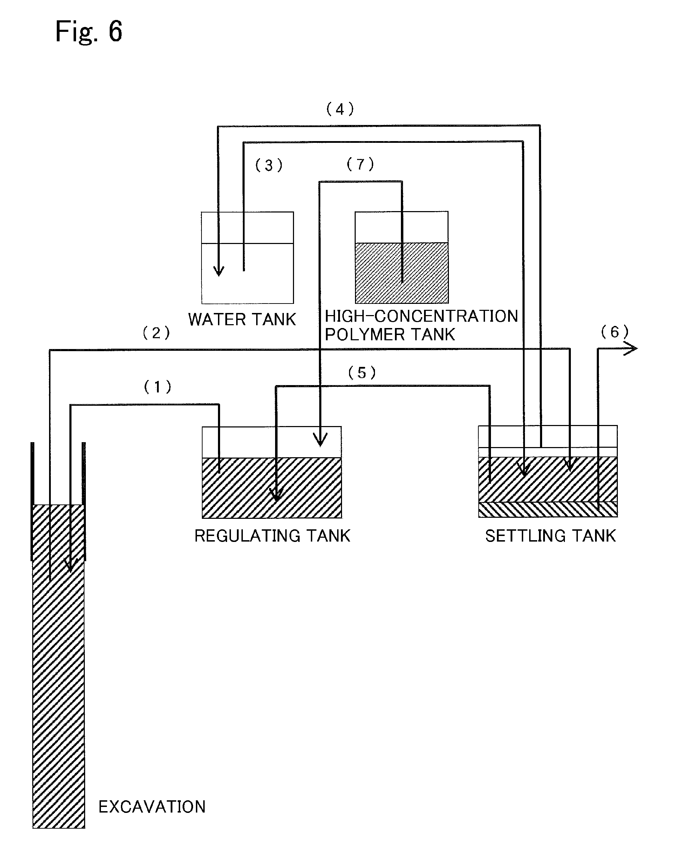

Fig. 6 illustrates an example of a system for separating, removing, and recycling mixed excavation waste. Details of processes (1) to (7) in the drawing are as follows.

(1) At the time of excavation, the stable liquid composition of a swollen superabsorbent polymer for ground excavation is transferred from a regulating tank to an excavation hole depending on an amount of soil excavated and is used as a stable liquid.
(2) When the excavation is finished and concrete is cast, the stable liquid composition of a swollen superabsorbent polymer for ground excavation mixed with excavation waste is recovered to a settling tank in accordance with the casting amount of concrete.
(3) In the settling tank, water is added from a water tank to separate the recovered stable liquid composition of a swollen superabsorbent polymer into three layers of supernatant water, the stable liquid composition of a swollen superabsorbent polymer for ground excavation, and precipitated waste.
(4) The supernatant water is recovered to the water tank.
(5) The stable liquid composition of a swollen superabsorbent polymer for ground excavation in the middle layer is sent to the regulating tank.
(6) The precipitated waste in the lowest layer is removed and disposed.
(7) If necessary, the high-concentration stable liquid composition of a swollen superabsorbent polymer for ground excavation is input to the regulating tank and the specific gravity and the viscosity of the stable liquid composition of a swollen superabsorbent polymer for ground excavation are adjusted.

By recycling the stable liquid composition of a swollen superabsorbent polymer for ground excavation using the above-mentioned system, it is possible to reduce the material cost of the stable liquid composition of a swollen superabsorbent polymer for ground excavation and it is not necessary to discharge and dispose the stable liquid composition of a swollen superabsorbent polymer for ground excavation except the time of a construction end, which is effective for reducing a disposal cost or an environmental load.

In the excavating construction using the stable liquid composition of a swollen superabsorbent polymer for ground excavation according to the present invention, it is preferable to reduce surface friction of a tremie pipe used in replacement of the stable liquid composition of a swollen superabsorbent polymer for ground excavation with concrete.

By reducing the surface friction of the tremie pipe, it is possible to prevent adhesion of concrete to the surface of the tremie pipe and thus to suppress an influence of concrete to the stable liquid composition of a swollen superabsorbent polymer for ground excavation.

In order to reduce the surface friction of the tremie pipe, fluororesin processing using polytetrafluoroethylene resin or the like can be performed or a sheet or member subjected to the fluororesin processing or the like can be attached to the surface of the tremie pipe, thereby reducing the surface friction.

The stable liquid composition of a swollen superabsorbent polymer for ground excavation according to the present invention can be suitably used as a stable liquid for a construction method of holding stability of a hole wall or a groove wall when excavation is performed in a cylindrical shape or in a groove shape under the ground, specifically, a cast-in-place piling method or a concrete continuous underground wall construction method, because the stable liquid composition has features that it can excellently form an aquiclude, and the specific gravity thereof can be easily adjusted without causing a problem in replaceability with concrete or adhesion to reinforcing bars, and the waste of the stable liquid can be easily processed.

Examples

The stable liquid composition of a swollen superabsorbent polymer for ground excavation according to the present invention has the following properties:

1) Appropriate adjustment of the specific gravity of the stable liquid composition of a swollen superabsorbent polymer for ground excavation;
2) Formation of an aquiclude;
3) Replacement of the stable liquid composition of a swollen superabsorbent polymer for ground excavation with concrete;
4) Adhesion of concrete to reinforcing bars;
5) Securement of completed part of construction of a pile or a continuous underground wall; and
6) Recyclability and hole bottom processability of the stable liquid composition of a swollen superabsorbent polymer for ground excavation.

The properties may additionally include the following:

7) Confirmation in a construction site.

As examples, the stable liquid composition of a swollen superabsorbent polymer for ground excavation according to the present invention will be specifically described below in regard to the satisfaction of the conditions of 1) to 6) and the confirmation of (7), but the present invention is not limited to the following examples.

<Preparation of Stable Liquid Composition of Swollen Superabsorbent Polymer for Ground Excavation>

Sodium-polyacrylate superabsorbent polymer particles (product name: SANFRESH ST-500D, ST-500MPSA, and Geosap, made by Sanyo Chemical Industries, Ltd.) having property values shown in Table 2 were used as superabsorbent polymer particles.

Table 2

| Product name | Composition | Amount of deionized water absorbed (g/g) | Mean particle diameter (μm) | Specific gravity |
|---|---|---|---|---|
| ST-500D | Sodium polyacrylate | 400 | 150~710 | 0.6 |
| ST-500MPSA | | 400 | 20~50 | 0.6 |
| Geosap | | 600 | 20~50 | 0.6 |

As the superabsorbent polymer particles, as shown in Table 3, the blended material in which ST-500D and ST-500MPSA were blended at a mass ratio of 25:75, and respective ST-500MPSA and Geosap were swollen by 350 times to 1000 times as much water, whereby stable liquid compositions of a swollen superabsorbent polymer for ground excavation (composition Nos. 1 to 6) were prepared. Regarding addition of the weighting material, the assistant material, and the stabilizer, barite was used as the weighting material, bentonite was used as the assistant material, and polyacrylamide was used as the stabilizer.

Table 3

| Composition No. | Viscosity type | Superabsorbent polymer (kg) | | | Weighting material (kg) | Assistant material (kg) | Stabilizer (kg) | Water (kg) |
|---|---|---|---|---|---|---|---|---|
| | | ST-500D | ST-500MPSA | Geosap | Barite | bentonite | Polyacrylamide | |
| 1 | High viscosity | 0.63 | 1.88 | 0 | 20 | 5 | 0 | 1000 |
| 2 | High viscosity | 0 | 2.86 | 0 | 20 | 5 | 0.7 | 1000 |
| 3 | Low viscosity | 0 | 1.67 | 0 | 0 | 0 | 0 | 1000 |
| 4 | Low viscosity | 0 | 0 | 1.00 | 0 | 0 | 0 | 1000 |
| 5 | Low viscosity | 0 | 0 | 1.00 | 0 | 5 | 0.25 | 1000 |
| 6 | Low viscosity | 0 | 0 | 1.00 | 0 | 0 | 0.25 | 1000 |

<1. Appropriate Adjustment of Specific Gravity of Stable Liquid Composition of Swollen Superabsorbent Polymer for Ground Excavation>

When the mass of superabsorbent polymer particles swollen by adding water is defined as $W_{P4}$, the volume thereof is defined as $V_{P4}$, the specific gravity thereof is defined as $\rho_{P4}$, the mass of the weighting material is defined as $W_S$, the volume thereof is defined as $V_S$, the specific gravity thereof is defined as $\rho_S$, the mass of the assistant material is defined as $W_h$, the volume thereof is defined as $V_h$, and the specific gravity thereof is defined as $\rho_h$, the specific gravity $\rho_C$ of the stable liquid composition of a swollen superabsorbent polymer for ground excavation is expressed by Expression (2). The adjustment of the specific gravity of the stable liquid was performed on the basis of Expression (2).

Math. 2

$$\rho_c = \frac{W_{P4}+W_s+W_h}{V_{p4}+V_s+V_h} = \frac{W_{P4}+W_s+W_h}{W_{p4}/\rho_{p4}+W_s/\rho_s+V_h/\rho_h} \qquad (2)$$

In the stable liquid composition of a swollen superabsorbent polymer for ground excavation according to the present invention, the specific gravity is adjusted to 1.20 or less.

Here, when it is assumed that 1 g of superabsorbent polymer particles as powder is mixed with 400 times as much water to swell the superabsorbent polymer particles and $W_S$ g of silt with specific gravity of 2.7 as a specific gravity regulator is added to the resultant and the mass $W_S$ of the weighting material to be added to prepare a stable liquid composition of a swollen superabsorbent polymer for ground excavation with specific gravity of 1.05 is calculated using Expression (1), the mass $W_S$ of the weighting material is equal to 32.7 g.

That is, by adding 23.7 g of silt to 400 g of the swollen superabsorbent polymer particles, it is possible to easily prepare a stable liquid composition of a swollen superabsorbent polymer for ground excavation with specific gravity of 1.05.

<2. Formation of Aquiclude>

Regarding formation of an aquiclude, formation of an aquiclude on an excavated groove wall surface by the stable liquid composition of a swollen superabsorbent polymer for ground excavation was confirmed through the following experiment.

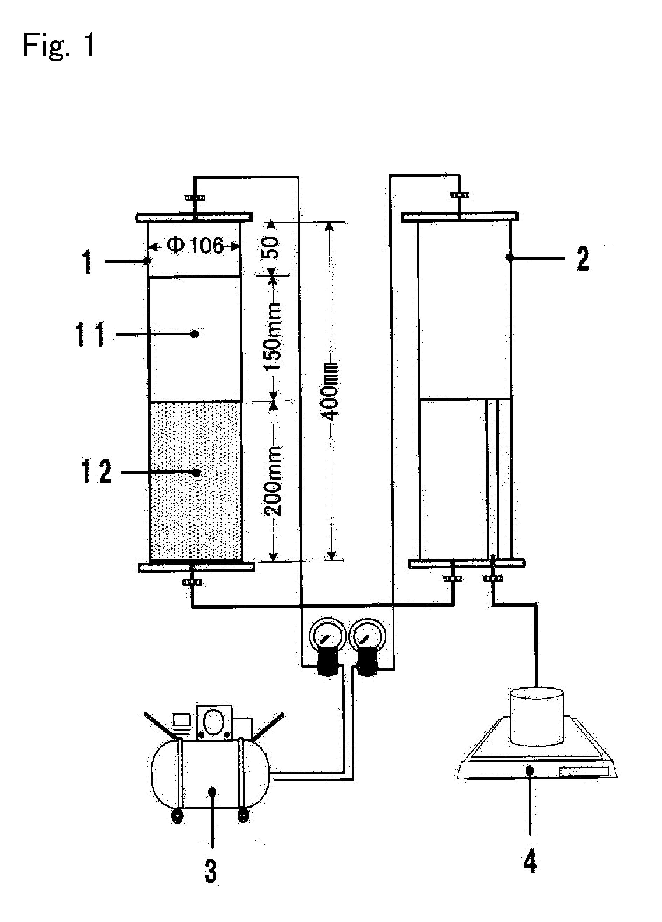

Fig. 1 is a schematic diagram of an apparatus for measuring formation of an aquiclude. In Fig. 1, the thickness of an imitation ground 12 was set to 200 mm, the imitation ground was assumed to include from a sand layer to a gravel ground, and Silica Sand No. 7, Silica Sand No. 5, Silica Sand No. 3, and Silica Sand No. 1 were used. The stable liquid composition of a swollen superabsorbent polymer for ground excavation shown in No. 4 of Table 3 was used as a stable liquid 11. The nature thereof is shown in Table 4.

Table 4

| Composition No. | Specific gravity | Funnel viscosity (s) | Amount of filtered water (ml) |
|---|---|---|---|
| 4 | 1.00 | 25 | 22 |

For comparison, mixed components and nature of the bentonite-based stable liquid composition (Composition No. 7) as the stable liquid 11 in Fig. 1 are shown in Table 5 and Table 6.

Table 5

| Composition No. | Bentonite (kg) | CMC (kg) | Dispersant (kg) | Water (kg) | Specific Gravity |
|---|---|---|---|---|---|
| 7 | 50 | 0.75 | 1.5 | 1000 | 1.03 |

Table 6

| Composition No. | Specific gravity | Funnel viscosity (s) | Amount of filtered water (ml) |
|---|---|---|---|
| 7 | 1.03 | 27 | 20 |

In this experiment, in order to confirm formation of an aquiclude at a large depth, a confining pressure of 300 kN/m$^2$ is applied to cylinder 1 and cylinder 2 by a compressor 3, and total 320 kN/m$^2$, by addition of 20 kN/m$^2$ as a pressure head, was applied to cylinder 1 by the compressor 3.

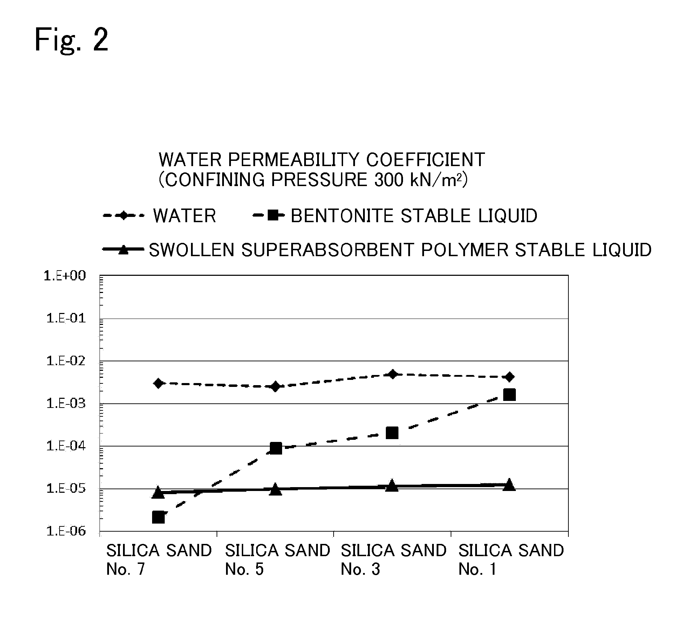

The water permeability coefficients of water as the stable liquid 11, the bentonite-based stable liquid composition, and the stable liquid composition of a swollen superabsorbent polymer for ground excavation obtained from the experiment are illustrated in Fig. 2.

In the test under a confining pressure of 300 kN/m$^2$, the water permeability coefficient of water is approximately $4 \times 10^{-3}$ cm/s regardless of the type of silica sand, the water permeability coefficient of the bentonite-based stable liquid composition is $2.2 \times 10^{-6}$ cm/s in Silica Sand No. 7 and formation of an aquiclude is observed. As the grain size becomes coarser from Silica Sand No. 5 to Silica Sand No. 3, the water permeability coefficient increases and it becomes more difficult to form an aquiclude. The water permeability coefficient is substantially equal to the permeability coefficient in Silica Sand No. 1 and the formation of an aquiclude is not observed.

On the contrary, the stable liquid composition of a swollen superabsorbent polymer for ground excavation forms an aquiclude of about $1 \times 10^{-5}$ cm/s regardless of the types of silica sand. Accordingly, it was confirmed that a stable aquiclude can be formed of the stable liquid composition of a swollen superabsorbent polymer for ground excavation.

<3. Replacement of Stable Liquid Composition of Swollen Superabsorbent Polymer for Ground Excavation with Concrete>

Regarding replacement of the stable liquid composition of a swollen superabsorbent polymer for ground excavation with concrete, dual reinforcing bar frames were installed in an acryl cylinder with an inner diameter of 400 mm and a height of 700 mm. The reinforcing bar frames were formed of deformed reinforcing bars with a length of 800 mm and D16 mm, were arranged in cylindrical shapes with diameters of 200 mm and 150 mm at about a pitch of 100 mm, and were fixed with hooped bars.

Then, the acryl cylinder and the reinforcing bar frames were aligned to be coaxial. After the reinforcing bar frames were installed, the cylinder was filled with the stable liquid composition of a swollen superabsorbent polymer for ground excavation shown in Composition No. 4 of Table 3, a polyvinylchloride pipe with an inner diameter of 70 mm was inserted into the center of the acryl cylinder up to the bottom, concrete with a slump of 21 cm was cast therein from a height of 100 cm, and then the replacement of the stable liquid composition of a swollen superabsorbent polymer for ground excavation was examined.

As a result, the replacement of the stable liquid composition of a swollen superabsorbent polymer for ground excavation with concrete exhibited no problem and it was also confirmed that inclusion did not appear.

<4. Adhesion of Concrete to Reinforcing Bars>

Regarding adhesion of concrete with reinforcing bars, a test was carried out on the standard (JSCE-G 503 1999) of Japan Society of Civil Engineers. Deformed reinforcing bars D22 were set in a steel form (150 × 150 × 150 mm) for a pulling test, the steel form was filled with the stable liquid composition of a swollen superabsorbent polymer for ground excavation shown in Composition No. 4 of Table 3 and the bentonite-based stable liquid composition shown in Table 5, the stable liquid compositions were made to adhere to the reinforcing bars, and the steel form was charged with concrete from the bottom using a tremie pipe, whereby the stable liquid compositions were replaced with concrete. After water curing of 28 days, an adhesion performance test of three reinforcing bars each was carried out.

The maximum adhesion stress was 9.41 N/mm$^2$ as for the stable liquid composition of a swollen superabsorbent polymer for ground excavation and was about 5% larger than that as for the bentonite-based stable liquid composition. The slippage was 0.65 which was substantially equal to that of the bentonite-based stable liquid composition and it was conformed that there was no problem.

<5. Securement of Completed Part of Construction of Pile or Continuous Underground Wall>

In order to check securement of completed part of construction of a pile or a continuous underground wall, the thickness of a mud layer remaining on a filter paper was measured using 3% bentonite stable liquid and the stable liquid composition of a swollen superabsorbent polymer for ground excavation shown in Composition No. 4 of Table 3 and using a filtration tester (filter paper: JIS3801 4 types).

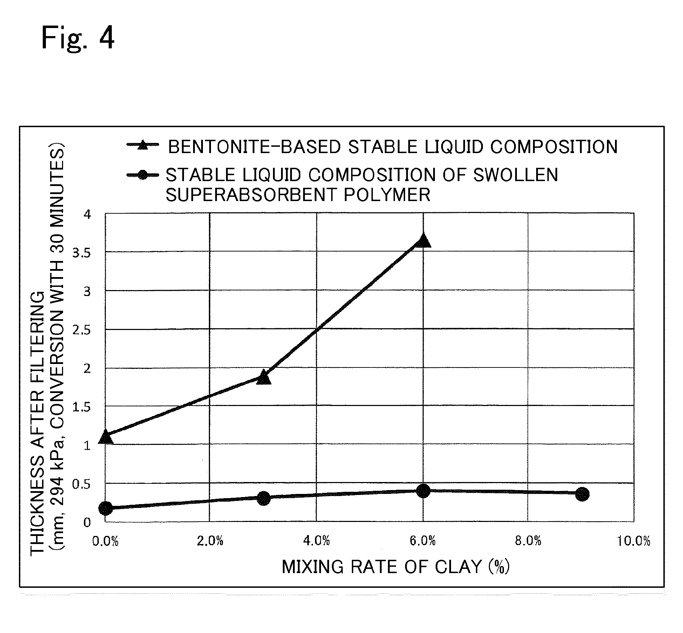

In Fig. 4, the horizontal axis represents the mixing rate of clay and the vertical axis represents the thickness of a mud layer remaining on the filter paper.

From this result, it was confirmed that the thickness of the mud layer of the bentonite stable liquid increased when the amount of mixed clay increased, but the thickness of the mud layer of the stable liquid composition of a swollen superabsorbent polymer for ground excavation was kept thin. Accordingly, it was confirmed that even when the amount of mixed clay was large, the thickness of the mud layer was kept small, whereby it was possible to secure the completed part of construction of concrete and to suppress a decrease of the maximum peripheral frictional force with the ground.

<6. Recyclability and Hole Bottom Processability of Stable Liquid Composition of Swollen Superabsorbent Polymer for Ground Excavation>

In order to confirm recyclability and hole bottom processability properties of the stable liquid composition of a swollen superabsorbent polymer for ground excavation, water was added to the bentonite-based stable liquid composition, the stable liquid composition of a swollen superabsorbent polymer for ground excavation shown in Composition No. 2 of Table 3 of a high viscosity type, and the stable liquid composition of a swollen superabsorbent polymer for ground excavation shown in Composition No. 2 to form a solution, sand imitating excavation waste was input to the solution to which water over the water-absorbing capability of the polymer was added, the resultant was put in a vessel and stirred well and placed, 4/5 from the top of the vessel was removed, and the weight of sand remaining as the other 1/5 was measured.

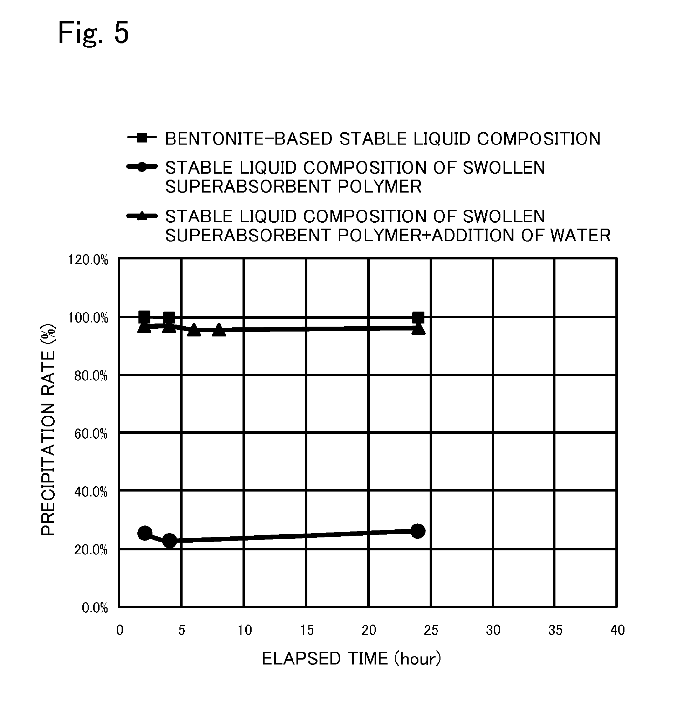

Fig. 5 illustrates the measurement result in which the horizontal axis represents the elapsed time and the vertical axis represents the precipitation rate (%) expressed by (weight of remaining sand)/(weight of initial sand).

From this result, it was confirmed that 100% of the sand was precipitated as for the bentonite-based stable liquid composition, but the stable liquid composition of a swollen superabsorbent polymer for ground excavation shown in Composition No. 2 of a high viscosity type had a tendency that only about 20% of sand weight was included in the remaining 20% of volume and the sand imitating the excavation waste substantially uniformly floated in the stable liquid and was not substantially precipitated even with the lapse of time.

When water over the water-absorbing capability of the polymer was added to the stable liquid composition of a swollen superabsorbent polymer for ground excavation in which the sand imitating the excavation waste floated uniformly, it was confirmed that the floating sand was precipitated substantially about 100%.

From this test result, it was confirmed that when the high viscosity type of stable liquid composition of a swollen superabsorbent polymer for ground excavation according to the present invention was used, the excavation waste at the time of excavation was not precipitated and the processability in the hole bottom was excellent and that the stable liquid composition of a swollen superabsorbent polymer for ground excavation and the excavation waste could be separated and recycled by recovering the stable liquid composition of a swollen superabsorbent polymer for ground excavation and adding water thereto.

<7. Confirmation in Construction Site>

For the purpose of confirmation in a construction site, the stable liquid composition of a swollen superabsorbent polymer for ground excavation was confirmed under the following conditions of Examples A to D using the stable liquid composition of a swollen superabsorbent polymer for ground excavation of Compositions A to C shown in Table 7.

Table 7

| Composition | Superabsorbent polymer (kg) | Weighting material (kg) | Assistant material (kg) | Stabilizer (kg) | Water (kg) | Specific gravity | Funnel viscosity (s) | Electric conductivity (mS/cm) |
|---|---|---|---|---|---|---|---|---|
| | Geosap | | Bentonite | polyacrylamide | | | | |
| A | 1.7 | 0 | 0 | 0 | 1000 | 1.01 | 56 | 0.69 |
| B | 1.25 | 0 | 0 | 0 | 1000 | 1.01 | 33 | 0.65 |
| C | 1.00 | 0 | 0 | 0.25 | 1000 | 1.01 | 31 | 0.60 |

(Example A)

Before an excavating construction, a high viscosity type of stable liquid composition of a swollen superabsorbent polymer for ground excavation with specific gravity of 1.01 and funnel viscosity of 56 seconds was prepared using Composition A shown in Table 7.

The excavation was carried out while inputting the stable liquid composition of a swollen superabsorbent polymer for ground excavation into an excavated hole, and the excavation was finished to a predetermined depth while maintaining stability of the hole wall.

The specific gravity of the stable liquid composition of a swollen superabsorbent polymer for ground excavation in the sampled excavated hole ranged from 1.10 to 1.13, the excavation waste serves as a weighting material enhancing the specific gravity, and a lot of excavation waste was incorporated into the stable liquid composition of a swollen superabsorbent polymer for ground excavation, whereby it was possible to achieve labor-saving in an excavation waste processing operation in the hole bottom.

(Example B)

Before an excavating construction, a low viscosity type of stable liquid composition of a swollen superabsorbent polymer for ground excavation with specific gravity of 1.01 and funnel viscosity of 33 seconds was prepared using Composition B shown in Table 7.

The excavation was carried out while inputting the stable liquid composition of a swollen superabsorbent polymer for ground excavation into an excavated hole, and the excavation was finished to a predetermined depth while maintaining stability of the hole wall.

The specific gravity of the stable liquid composition of a swollen superabsorbent polymer for ground excavation in the sampled excavated hole ranged from 1.02 to 1.03, the excavation waste slightly serves as a weighting material enhancing the specific gravity, and the excavation waste was hardly incorporated into the stable liquid composition of a swollen superabsorbent polymer for ground excavation, whereby it was possible to rapidly perform an excavation waste processing operation in the hole bottom.

In the stable liquid composition of a swollen superabsorbent polymer in the vicinity of the boundary with concrete, which was recovered at the time of casting concrete, the funnel viscosity was 21 seconds and the electric conductivity was 0.86 mS/cm, which greatly degraded due to the contact with concrete.

By adding 0.05% of a stabilizer (polyacrylamide) to the greatly-degraded stable liquid composition of a swollen superabsorbent polymer for ground excavation, the funnel viscosity was 37 seconds and the electric conductivity was 0.78 mS/cm. By adding 0.025% of the stabilizer thereto, the funnel viscosity was 29 seconds and the electric conductivity was 0.72 mS/cm. Accordingly, by adding a small amount of stabilizer to the stable liquid composition of a swollen superabsorbent polymer for ground excavation, the electrolyte concentration decreased and it was possible to recover the degraded nature and quality.

(Example C)

Before an excavating construction, a low viscosity type of stable liquid composition of a swollen superabsorbent polymer for ground excavation with specific gravity of 1.01 and funnel viscosity of 31 seconds was prepared using Composition C shown in Table 7.

The excavation was carried out while inputting the stable liquid composition of a swollen superabsorbent polymer for ground excavation into an excavated hole, and the excavation was finished to a predetermined depth while maintaining stability of the hole wall. In the stable liquid composition of a swollen superabsorbent polymer for ground excavation, which was recovered at the time of casting concrete, the funnel viscosity was 28.2 seconds and the electric conductivity was 0.55 mS/cm. By adding a stabilizer in advance, it was possible to suppress the degradation of nature and quality of the stable liquid composition of a swollen superabsorbent polymer for ground excavation.

A superabsorbent polymer, a stabilizer, and water were appropriately added to the recovered stable liquid composition of a swollen superabsorbent polymer for ground excavation to adjust the funnel viscosity to 30 seconds, and the resultant was recycled as a stable liquid composition of a swollen superabsorbent polymer for the next ground excavation for the next excavation construction.

(Example D)

0.1 % of calcium chloride was added to the stable liquid composition of a swollen superabsorbent polymer for ground excavation not recovered and remaining after the excavation construction was finished, and the resultant was stirred. The superabsorbent polymer and the weighting material such as the excavation waste in the stable liquid com-

EP 2 746 364 A1

position of a swollen superabsorbent polymer for ground excavation were precipitated into the bottom and were separated from the upper water, whereby about 70% of the amount of waste soil could be reduced.

Reference Signs List

1: cylinder A
11: stable liquid
12: imitation ground
2: cylinder B
3: compressor
4: electronic scale

**Claims**

1. A stable liquid composition of a swollen superabsorbent polymer for ground excavation comprising:

   water; and
   superabsorbent polymer particles swollen by water absorption,
   wherein the specific gravity of the stable liquid composition of a swollen superabsorbent polymer for ground excavation is equal to or less than 1.20.

2. The stable liquid composition of a swollen superabsorbent polymer for ground excavation according to claim 1, further comprising a weighting material of an inorganic material of which the maximum particle diameter is equal to or less than 2.0 mm.

3. The stable liquid composition of a swollen superabsorbent polymer for ground excavation according to claim 2, wherein the weighting material is fine particles of a ground which are mixed from an excavated ground at the time of excavation.

4. The stable liquid composition of a swollen superabsorbent polymer for ground excavation according to claim 2 or 3, wherein the weighting material is at least one type selected from silt, clay minerals, and sulfate minerals.

5. The stable liquid composition of a swollen superabsorbent polymer for ground excavation according to any one of claims 1 to 4, wherein a stabilizer enabling degradation suppression or recovery of nature and quality of the stable liquid composition of a swollen superabsorbent polymer for ground excavation is added when electrolytes such as concrete, salt and so on or acid or alkali materials are mixed.

6. The stable liquid composition of a swollen superabsorbent polymer for ground excavation according to claim 5, wherein the stabilizer is a stabilizer that lowers an electrolyte concentration.

7. The stable liquid composition of a swollen superabsorbent polymer for ground excavation according to claim 5 or 6, wherein the stabilizer is a neutralizer that neutralizes pH (hydrogen-ion exponent concentration).

8. The stable liquid composition of a swollen superabsorbent polymer for ground excavation according to any one of claims 5 to 7, wherein the stabilizer is at least one type selected from diluted sulfuric acid, aluminum sulfate, aluminum hydroxide, magnesium hydroxide, polyacrylamide, polyvinyl alcohol, sodium polyacrylate, polyethylene oxide, hydrogen carbonate, and carbonate.

9. The stable liquid composition of a swollen superabsorbent polymer for ground excavation according to any one of claims 1 to 8, further comprising an assistant material for improving excavated wall stability.

10. The stable liquid composition of a swollen superabsorbent polymer for ground excavation according to claim 9, wherein the assistant material is at least one type selected from lost circulation preventing materials such as bentonite, sawdust, pulp, rock wool, fiber and so on and water-soluble polymers.

17

**EP 2 746 364 A1**

11. The stable liquid composition of a swollen superabsorbent polymer for ground excavation according to any one of claims 1 to 10, wherein the superabsorbent polymer particles are at least one type selected from starch-based materials, cellulose-based materials, and synthetic polymer-based materials.

12. The stable liquid composition of a swollen superabsorbent polymer for ground excavation according to any one of claims 1 to 11, wherein the superabsorbent polymer particles swollen by water absorption are superabsorbent polymer particles having a cross-linked structure and not discharging water by pressurization.

13. The stable liquid composition of a swollen superabsorbent polymer for ground excavation according to any one of claims 1 to 12, wherein the particle diameter of the superabsorbent polymer particles swollen by water absorption after being swollen is equal to or less than 3 mm.

14. The stable liquid composition of a swollen superabsorbent polymer for ground excavation according to any one of claims 1 to 13, wherein funnel viscosity (500 ml/500 ml) ranges from 19 sec to 120 sec.

15. The stable liquid composition of a swollen superabsorbent polymer for ground excavation according to any one of claims 1 to 14, wherein electric conductivity is equal to or less than 10 mS/cm.

16. A construction method in which water is discharged from the superabsorbent polymer particles by adding an electrolyte to the stable liquid composition of a swollen superabsorbent polymer for ground excavation according to any one of claims 1 to 15, and the swollen superabsorbent polymer stable liquid composition is separated into the weighting material, the water including the electrolyte, and the superabsorbent polymer particles having the water discharged therefrom to reduce an amount of waste soil.

17. The construction method according to claim 16, wherein the electrolyte is at least one type selected from calcium chloride, citric acid, sodium hydroxide, and sodium chloride.

18. A construction method in which an excavating construction is carried out using the stable liquid composition of a swollen superabsorbent polymer for ground excavation according to any one of claims 1 to 15, the stable liquid composition of a swollen superabsorbent polymer for ground excavation is recovered after the excavation, water, superabsorbent polymer particles, a weighting material, a stabilizer, and an assistant material are appropriately added to the recovered stable liquid composition of a swollen superabsorbent polymer for ground excavation to adjust nature and quality thereof, and the resultant stable liquid composition of a swollen superabsorbent polymer for ground excavation is recycled as a stable liquid for the next excavation.

19. A construction method in which an excavating construction is carried out by mixing and using the stable liquid composition of a swollen superabsorbent polymer for ground excavation according to any one of claims 1 to 15 at high viscosity at which the funnel viscosity (500 ml/500 ml) ranges 45 sec to 120 sec, and a hole bottom processing operation is skipped by adding excavation waste mixed into the stable liquid composition of a swollen superabsorbent polymer for ground excavation at the time of excavation to the stable liquid composition of a swollen superabsorbent polymer for ground excavation.

20. A construction method in which an excavating construction is carried out by mixing and using the stable liquid composition of a swollen superabsorbent polymer for ground excavation according to any one of claims 1 to 15 at low viscosity at which the funnel viscosity (500 ml/500 ml) ranges 19 sec to 44 sec, and a hole bottom excavation waste processing operation is rapidly carried out by early precipitating excavation waste mixed into the stable liquid composition of a swollen superabsorbent polymer for ground excavation at the time of excavation onto a hole bottom.

21. A construction method in which an excavating construction is carried out using the stable liquid composition of a swollen superabsorbent polymer for ground excavation according to any one of claims 1 to 15, the used stable liquid composition of a swollen superabsorbent polymer for ground excavation is recovered, excavation waste mixed at the time of excavation construction is precipitated by adding water to the recovered stable liquid composition of a swollen superabsorbent polymer for ground excavation, the stable liquid composition of a swollen superabsorbent polymer for ground excavation and the excavation waste are separated from each other, and the stable liquid composition of a swollen superabsorbent polymer for ground excavation of which the specific gravity is reduced is recycled for the next construction.

22. A construction method in which an excavating construction is carried out using the stable liquid composition of a

18

swollen superabsorbent polymer for ground excavation according to any one of claims 1 to 15, and a friction reducing operation is carried out to suppress an influence of concrete to the stable liquid composition of a swollen superabsorbent polymer for ground excavation by applying or attaching a friction-reducing material to a surface of a tremie pipe at the time of casting the concrete from the bottom using the tremie pipe.

23. The construction method according to any one of claims 16 to 22, wherein the construction method is a cast-in-place piling method or a concrete continuous underground wall construction method.

## Fig. 1

# Fig. 2

WATER PERMEABILITY COEFFICIENT
(CONFINING PRESSURE 300 kN/m²)

- ◆ - WATER    - ■ - BENTONITE STABLE LIQUID
- ▲ - SWOLLEN SUPERABSORBENT POLYMER STABLE LIQUID

## Fig. 3

Fig. 4

## Fig. 5

Legend:
- ■ BENTONITE-BASED STABLE LIQUID COMPOSITION
- ● STABLE LIQUID COMPOSITION OF SWOLLEN SUPERABSORBENT POLYMER
- ▲ STABLE LIQUID COMPOSITION OF SWOLLEN SUPERABSORBENT POLYMER+ADDITION OF WATER

Y-axis: PRECIPITATION RATE (%)
X-axis: ELAPSED TIME (hour)

# Fig. 6

( 4 )

( 3 )　　　　( 7 )

WATER TANK　　　HIGH-CONCENTRATION
POLYMER TANK

( 2 )

( 1 )　　　　　　　　( 5 )　　　　　　　　　( 6 )

REGULATING TANK　　　　　SETTLING TANK

EXCAVATION

<table>
<tr><td colspan="2" align="center">**INTERNATIONAL SEARCH REPORT**</td><td colspan="2">International application No.<br>PCT/JP2012/070769</td></tr>
</table>

**A. CLASSIFICATION OF SUBJECT MATTER**
*C09K17/18*(2006.01)i, *C09K17/02*(2006.01)i, *C09K17/06*(2006.01)i, *C09K17/48*(2006.01)i, *E02D5/18*(2006.01)i, *E02D5/20*(2006.01)i, *C09K103/00*(2006.01)n

According to International Patent Classification (IPC) or to both national classification and IPC

**B. FIELDS SEARCHED**

Minimum documentation searched (classification system followed by classification symbols)
C09K17/18, C09K17/02, C09K17/06, C09K17/48, E02D5/18, E02D5/20, C09K103/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 5-9468 A (Sanyo-Kokusaku Pulp Co., Ltd. et al.),<br>19 January 1993 (19.01.1993),<br>claims; paragraphs [0001], [0008], [0009];<br>examples 1, 2; tables 1, 2<br>(Family: none) | 1,5-11,18,23<br>2-4,12-17,<br>19-22 |
| Y | JP 49-46763 B1 (Toagosei Chemical Industry Co., Ltd.),<br>12 December 1974 (12.12.1974),<br>claims; page 2, line 40 to page 3, line 4;<br>examples<br>(Family: none) | 1-23 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>31 October, 2012 (31.10.12) | Date of mailing of the international search report<br>13 November, 2012 (13.11.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/070769

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2009/057367 A1 (Waseda University et al.), 07 May 2009 (07.05.2009), claims; page 15, 6th line from the bottom to page 18, line 1 & JP 4970547 B2          & EP 2208826 A1 & WO 2009/057367 A1       & CN 101861435 B | 2-4 |
| Y | JP 2002-161268 A (Fujita Corp. et al.), 04 June 2002 (04.06.2002), claims; paragraphs [0009], [0010], [0015], [0016], [0031], [0032]; examples (Family: none) | 4 |
| Y | JP 7-126619 A (Telnite Co., Ltd.), 16 May 1995 (16.05.1995), claims; paragraphs [0001], [0006], [0014], [0015]; examples (Family: none) | 4,12,13 |
| Y | JP 58-27780 A (Sumitomo Chemical Co., Ltd. et al.), 18 February 1983 (18.02.1983), claims; page 2, upper right column, line 2 to lower left column, line 3; examples (Family: none) | 12,13 |
| Y | JP 8-260867 A (Obayashi Corp.), 08 October 1996 (08.10.1996), claims; paragraphs [0022], [0028] (Family: none) | 15-17 |
| Y | JP 60-40416 B2 (Taisei Corp.), 02 March 1985 (02.03.1985), claims; page 3, upper left column, line 2 to lower left column, line 19; fig. 3 to 4 (Family: none) | 22 |
| A | JP 2001-207436 A (Waseda University et al.), 03 August 2001 (03.08.2001), claims; paragraphs [0013], [0014]; examples (Family: none) | 1-23 |
| A | Technical report of Research Laboratory of Sumitomo Construction, 01 September 1983 (01.09.1983), no.10, pages 37 to 41 | 1-23 |

Form PCT/ISA/210 (continuation of second sheet) (July 2009)

**EP 2 746 364 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3158940 B
- JP 2004099677 A
- JP 3725750 B